**Europäisches Patentamt**

**European Patent Office**

**Office européen des brevets**

(19)

(11) Veröffentlichungsnummer : **0 157 824**
**B1**

# (12)  EUROPÄISCHE PATENTSCHRIFT

(45) Veröffentlichungstag der Patentschrift :
04.05.88

(21) Anmeldenummer : 84903530.8

(22) Anmeldetag : 04.10.84

(86) Internationale Anmeldenummer :
PCT/CH 84/00164

(87) Internationale Veröffentlichungsnummer :
WO/8501434 (11.04.85 Gazette 85/09)

(51) Int. Cl.⁴ : **A 61 C  5/12**

(54) **FOLIENFÖRMIGE DENTALMATRIZE.**

(30) Priorität : 04.10.83 CH 5388/83

(43) Veröffentlichungstag der Anmeldung :
16.10.85 Patentblatt 85/42

(45) Bekanntmachung des Hinweises auf die Patenterteilung : 04.05.88 Patentblatt 88/18

(84) Benannte Vertragsstaaten :
AT BE CH DE FR GB LI LU NL SE

(56) Entgegenhaltungen :
EP-A- 0 087 022
US-A- 2 611 182

(73) Patentinhaber : **von Weissenfluh, Hans**
**CH-6573 Magadino (CH)**

**RICHNER, Giacomo**
**Via Lucino 20**
**CH-6932 Breganzona (CH)**

(72) Erfinder : **von Weissenfluh, Hans**
**CH-6573 Magadino (CH)**
Erfinder : **RICHNER, Giacomo**
**Via Lucino 20**
**CH-6932 Breganzona (CH)**

(74) Vertreter : **Saigo, Reinhold Caspar**
**Usterstrasse 139**
**CH-8621 Wetzikon 4 (CH)**

EP 0 157 824 B1

**Beschreibung**

Die vorliegende Erfindung betrifft eine Matrize zur äusseren Formgebung von Zahnfüllungen in oraler, koronaler und proximaler Lage, also im gesamten Kronenbereich.

Werden Zahnfüllungen aus Amalgamen oder selbsthärtenden Zementen anorganischer oder organischer Basis eingebracht, so geschieht die äussere Formgebung in bekannter Weise mit den zahnärztlichen Instrumenten, teils vor, teils nach dem Erhärten des Füllmaterials. In neuerer Zeit werden vermehrt Füllungen aus Einkomponenten-Kunststoffen eingebracht, die zur Polymerisation — oder zumindest zu deren Einleitung — Licht oder ultraviolette Strahlung benötigen. Es liegt im Wesen dieser genannten Kunststoffe, dass die Polymerisation in Gegenwart von Sauerstoff nur unvollständig verläuft, dass also monomeres, partiell oxidiertes Ausgangsmaterial anstelle des gewünschten Polymerisates vorliegt. Solcher oxidierter Monomer muss von der Oberfläche der Füllung entfernt werden, da er völlig ungenügende mechanische Eigenschaften aufweist.

Um den Luftkontakt des Füllungsmaterials während der Polymerisation zu vermeiden, sind verschiedene Abdeck-Vorrichtungen vorgeschlagen worden. Eine solche Vorrichtung, ist beispielsweise durch die CH-A-626 247 bekannt geworden ; diese eignet sich jedoch ausschliesslich für vestibuläre Füllungen, da sie während des Polymerisationsvorganges von aussen auf den Zahn gepresst wird.

Es gehört ferner zum Stande der Technik, bei Füllungen, in oraler und proximaler Lage einen ursprünglich ebenen UV-transparenten Kunststoffstreifen U-förmig um den zu behandelnden Zahn herumzulegen und vestibulär mit einem geeigneten Instrument zusammenzupressen, während mit einer UV-Lampe die Füllung bestrahlt wird.

Dieses Verfahren hat den Nachteil, dass nur solche äussere Formgebungen der Füllung möglich sind, die im wesentlichen eine ebene Abwicklung haben. Dies zwingt dazu, den Füllungsaufbau mehrstufig zu machen, oder allenfalls grössere Mengen überschüssigen Materials wieder abzutragen, was gerade in den Zahnzwischenräumen äusserst schwierig und aufwendig ist.

Es sind auch elastische Folien vorgeschlagen worden, die aber den Nachteil haben, das Füllmaterial aus der eben gefüllten Kavität auszupressen, wenn die Folie so satt angelegt wird, wie es für den angestrebten Zweck erforderlich ist.

Aus der US-A-2 611 182 ist eine folienförmige Matrize gemäß dem Oberbegriff des Patentanspruchs 1 bekannt, die zur äußeren Formgebung von Füllungen der Vorderzähne bestimmt ist und aus dünnem rostfreien Stahlblech besteht. Ihr mangelt die Lichtdurchlässigkeit, die für lichthärtende Polymere notwendig ist. Zudem lässt sie gerade die Bereiche der Schneidekanten und Kauflächen offen. Die aus der EP-A-0 087 022

bekannte licht- und UV-durchlässige Dentalmatrize ist jeweils für eine bestimmte Partie eines bestimmten Zahnes geeignet ; sind mehrere Stellen des gleichen Zahnes, oder insbesondere der Kronenbereich von Molaren von einer Reparatur betroffen, so muss mit einer Mehrzahl von Formstücken in mehreren Arbeitsgängen gearbeitet werden.

Die Aufgabe, die mit der vorliegenden Erfindung gelöst werden soll, ist die Schaffung einer folienförmigen Dentalmatrize zur äusseren Formgebung von Füllungen im gesamten Kronenbereich, einschliesslich der Schneidekanten und Kauflächen, wobei das Folienmaterial licht- und UV-durchlässig sein soll und sich mit den in Betracht zu ziehenden strahlen-härtenden Einkomponenten-Kunststoffen nicht verbinden darf. Diese Matrize soll so geformt sein, dass jeweils für einen Zahntyp — z. B. oberer Schneidezahn, unterer Eckzahn — zwei Matrizen genügen, eine für Füllungen im lingualen und proximalen, eine zweite für Füllungen im vestibulären und proximalen Bereich, und dass die Anpassung an die verschiedenen Grössen dieses genannten Zahntyps über die verbleibende beschränkte Verformbarkeit der Matrize aufgenommen wird. Es gehöhrt ferner zur Aufgabe der Erfindung, die Handhabung ohne zusätzliches und aufwendiges Werkzeug zu ermöglichen.

Die erfindungsgemässe Lösung der Aufgabe ist im Patentanspruch 1 angegeben. Die Matrize kann so gestaltet sein, dass Platz vorhanden ist, um dem Verlaufe des Zahnfleisches Rechnung zu tragen, und die Materialstärke im Bereich der Zahnseitenflanken so reduziert ist, dass nur wenige Matrizen-Grössen, oder gar eine einzige ausreichen, um alle vorkommenden Form- und Grössenvarianten desselben Zahnes zu versorgen.

Anhand der beigefügten Zeichnungen soll der Erfindungsgegenstand näher erläutert werden. Es zeigen :

Fig. 1 eine erfindungsgemässe Matrize in der Ausführung für einen oberen Schneidezahn,

Fig. 2 eine erfindungsgemässe Matrize in der Ausführung für einen unteren Eckzahn, ·

Fig. 3 eine erfindungsgemässe Matrize in der Ausführung für einen unteren Backenzahn,

Fig. 4 eine erfindungsgemässe Matrize in der Ausführung für einen unteren Schneidezahn bei frontaler Füllung.

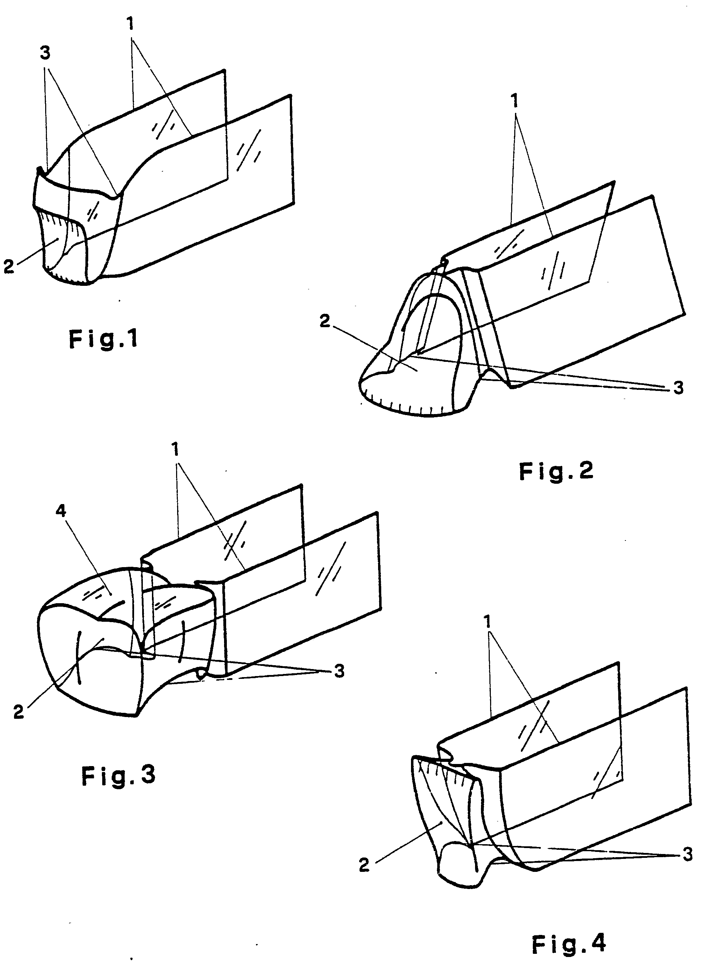

Die erfindungsgemässe Dentalmatrize gemäss Fig. 1 besteht aus zwei ebenen Lappen 1 und einem ausgeformten Mittelstück 2, das die wesentlichen Formmerkmale der palatinalen Seite und der Schneide-Kante der oberen Schneidezähne trägt. Das Mittelstück ist ferner so geformt, dass es einem oberen Schneidezahn auch seitlich formschlüssig anliegt, dergestalt, dass auch proximale Füllungen mit der erfindungsgemässen Matrix geformt werden können.

An den beiden ebenen Lappen 1 ist je eine Auskerbung 3 angebracht, die Platz lässt für das interdentale Zahnfleisch. Die Stärke des Materials ist im Bereich der Zahnseitenflanken so reduziert, dass die verschiedenen Grössen und Formvarianten von oberen Schneidezähnen durch eine einzige Matrize versorgt werden können. In der Anwendung werden die beiden Lappen 1 mit einer Dentalpinzette so nah am Zahn gefasst, dass durch Zusammenziehen der genannten Lappen die Matrize sich um den Zahn schliesst.

Eine nicht gezeichnete Variante ist von gleichem Aufbau, trägt jedoch im Mittelstück 2 die wesentlichen Formmerkmale der unteren Schneidezähne.

Die Ausführungsform gemäss Fig. 2 ist für einen unteren Eckzahn. Sie ist, wie diejenige gemäss Fig. 1, gegliedert in die ebenen Lappen 1, die hier beispielsweise gegeneinander geneigt sind, und in das Mittelstück 2. Dieses ist gemäss seinem Verwendungszweck so geformt, dass es einem unteren Eckzahn formschlüssig anliegt, wenn die Matrize gemäss Fig. 2 von der lingualen Seite her über den Eckzahn gelegt und an den Lappen 1 zusammengezogen wird. Auch dieses Ausführungsbeispiel trägt zwei Auskerbungen 3, die Raum lassen für das mandibuläre Zahnfleisch. Im Bereich der seitlichen Zahnflanken ist das Folienmaterial so dünn gestaltet, dass die gleiche Ausführungsform für im wesentlichen alle vorkommenden Grössen und Formen unterer Eckzähne verwendet werden kann.

Fig. 3 zeigt das Ausführungsbeispiel für einen — beispielsweise — unteren Backenzahn. Die Strukturelemente der Ausführungsbeispiele gemäss Fig. 1 und 2 sind hier ebenfalls vorhanden : die ebenen Lappen 1, das Mittelstück 2 und die zwei Auskerbungen 3. Der Unterschied zu den anderen gezeigten Ausführungsbeispielen besteht darin, dass hier die Folie auch zur Versorgung der Kaufläche ausgebildet ist ; sie weist daher eine Deckfläche 4 auf. Der Formenreichtum und die individuellen Ausprägungen sind bei Backenzähnen jedoch so mannigfach, dass die Kaufläche nur allgemein typische Merkmale trägt. Damit wird inkauf genommen, dass die Füllung okklusal nachgearbeitet werden muss, was aber auch bei anderen Füllungen — ohne Matrize — auf organischer oder anorganischer Basis — praktisch die Regel ist. Die dickenmässige Ausgestaltung der Folie im Bereich der Zahnseitenflanken erlaubt, trotz der grösseren Steifigkeit des Mittelstückes 2, mit wenigen Grössenausführungen auszukommen, da die Matrize dadurch beschränkt verformbar ist.

Das Ausführungsbeispiel gemäss Fig. 4 ist vorgesehen für Füllungen auf der frontalen Seite eines unteren Schneidezahnes. Die erfindungsgemässe Matrize besitzt auch hier zwei ebene Lappen 1, die sich an das geformte Mittelstück 2 anschliessen, wobei im Uebergang auch hier zwei Auskerbungen 3 vorgesehen sind, um dem Verlauf des interdentalen Zahnfleisches Rechnung zu tragen. In der zahnärztlichen Anwendung wird die erfindungsgemässe Matrize gemäss Fig. 4 von der vestibulären Seite her an den Zahn angelegt und auf der lingualen Seite mit einem hiefür geeigneten Instrument zusammengepresst.

## Patentansprüche

1. Aus einer Folie bestehende Dentalmatrize zur äußeren Formgebung von Zahnfüllungen, wobei die Folie ein die anatomischen Formmerkmale des zu behandelnden Zahnes aufweisendes Mittelstück (2) und zwei sich beidseitig an des Mittelstück anschließende, im wesentlichen ebene Lappen (1) besitzt, an denen die Matrize mit einem geeigneten Instrument gehalten und den Zahn umschließend zusammengepreßt werden kann, dadurch gekennzeichnet, daß zur äußeren Formgebung von Füllungen im gesamten Kronenbereich das Mittelstück (2) der Folie derart ausgeformt ist, daß es auch die Schneidekante oder Kaufläche des zu versorgenden Schneide-, Eck- oder Backenzahns umschließt, und daß die Folie im wesentlichen U-förmig ausgebildet ist und aus sich mit strahlenhärtenden Kunststoff-Füllungsmaterialien nicht verbindendem, Licht- und UV-Strahlung-durchlässigem Material besteht.

2. Dentalmatrize nach Patentanspruch 1, dadurch gekennzeichnet, dass sie im Uebergang vom Mittelstück (2) zu den beiden ebenen Lappen (1) eine Auskerbung (3) aufweist zur Anpassung an den Verlauf des Zahnfleischrandes.

3. Dentalmatrize nach Patentanspruch 1 oder 2, dadurch gekennzeichnet, dass sie im Bereich der Zahnseitenflanken eine reduzierte Materialstärke aufweist.

4. Dentalmatrize nach Patentanspruch 1, 2 oder 3, dadurch gekennzeichnet, dass sie die anatomischen Formmerkmale des zu behandelnden Zahnes im lingualen und proximalen Bereich aufweist.

5. Dentalmatrize nach Patentanspruch 1, 2 oder 3, dadurch gekennzeichnet, dass sie die anatomischen Formmerkmale des zu behandelnden Zahnes im vestibulären und proximalen Bereich aufweist.

## Claims

1. Dental die consisting of a foil, for the external fashioning of tooth fillings, in which the foil has a central piece (2) having the anatomical characteristics of shape of the tooth which is to be treated, and two substantially flat tabs (1), adjoining the central piece on both sides, against which the die is held by a suitable instrument, and can be compressed surrounding the tooth, characterized in that for the external fashioning of fillings in the entire crown region, the central piece (2) of the foil is formed out such that it also surrounds the cutting edge or chewing surface of the incisor, canine or molar which is to be taken care of, and that the foil is constructed substantially in a U-shape, and consists of material permeable by light and UV-radiation, which does not combine with radiation-hardening synthetic filling materials.

2. Dental die according to Patent Claim 1, characterized in that in the transition from the central piece (2) to the two flat tabs (1) it has a scallop (3) for adaptation to the course of the gum.

3. Dental die according to Patent Claim 1 or 2, characterized in that in the region of the lateral flanks of the tooth it has a reduced thickness of material.

4. Dental die according to Patent Claim 1, 2 or 3, characterized in that it has the anatomical characteristics of shape of the tooth which is to be treated in the lingual and proximal region.

5. Dental die according to Patent Claim 1, 2, or 3, characterized in that it has the anatomical characteristics of shape of the tooth which is to be treated in the vestibular and proximal region.

## Revendications

1. Matrice dentaire composée d'une feuille, pour le modelage extérieur d'obturations dentaires, la feuille possédant une partie centrale (2) qui présente les caractéristiques de forme anatomiques de la dent à traiter et deux pattes sensiblement planes (1) qui se raccordent à la partie centrale des deux côtés, et par lesquelles la matrice peut être tenue à l'aide d'un instrument approprié et comprimée autour de la dent, caractérisée en ce que, pour le modelage extérieur d'obturations dans toute la région de la couronne, la partie centrale (2) de la feuille est d'une configuration telle qu'elle entoure également l'arête tranchante ou la face triturante de l'incisive, canine ou molaire à traiter, et en ce que la feuille est d'une forme sensiblement en U et est constituée par une matière transparente à la lumière et aux UV et qui ne se lie pas aux matières d'obturation faites de résines synthétiques qui durcissent sous l'effet du rayonnement.

2. Matrice dentaire selon la revendication 1, caractérisée en ce qu'elle présente, à la jonction entre la partie centrale (2) et les deux pattes planes (1), une échancrure (3) destinée à l'adaptation de la matrice au profil du bord de la gencive.

3. Matrice dentaire selon la revendication 1 ou 2, caractérisée en ce qu'elle présente une épaisseur de matière réduite dans la région des flancs latéraux de la dent.

4. Matrice dentaire selon la revendication 1, 2 ou 3, caractérisée en ce qu'elle présente les caractéristiques de forme anatomiques de la dent à traiter dans la région linguale et dans la région proximale.

5. Matrice dentaire selon la revendication 1, 2 ou 3, caractérisée en ce qu'elle présente les caractéristiques de forme anatomiques de la dent à traiter dans la région vestibulaire et proximale.

Fig. 1

Fig. 2

Fig. 3

Fig. 4